(19) Europäisches Patentamt
European Patent Office
Office européen des brevets

(11) EP 0 536 666 B1

(12) **EUROPEAN PATENT SPECIFICATION**

(45) Date of publication and mention
of the grant of the patent:
**29.12.1997 Bulletin 1997/52**

(51) Int Cl.6: **H04N 7/00**

(21) Application number: **92116956.1**

(22) Date of filing: **05.10.1992**

(54) **A 3 branch encoder for the transmission of high resolution television signals**

Kodierer mit 3 Wegen zur Übertragung von Fernsehsignalen mit hoher Auflösung

Codeur à 3 branches pour la transmission de signaux de télévision à haute résolution

(84) Designated Contracting States:
**DE FR GB NL**

(30) Priority: **05.10.1991 KR 9117460**

(43) Date of publication of application:
**14.04.1993 Bulletin 1993/15**

(73) Proprietor: **DAEWOO ELECTRONICS CO., LTD**
**Jung-Gu, Seoul 100-095 (KR)**

(72) Inventor: **Seo, Jin-Woo**
**Guro-Ku Seoul (KR)**

(74) Representative: **Turi, Michael, Dipl.-Phys. et al**
**Samson & Partner**
**Widenmayerstrasse 5**
**80538 München (DE)**

(56) References cited:
**EP-A- 0 392 576**          **WO-A-87/05769**

- **SIGNAL PROCESSING OF HDTV.
PROCEEDINGS OF THE SECOND WORKSHOP
ON SIGNAL PROCESSING OF HDTV. 29
February 1988, L'AQUILA(IT) pages 337 - 344 ,
XP75070 J. VAN DER MEER ET AL. 'Movement
Processing for an HD-MAC Coding System'**

**Description**

Field of the Invention

The present invention relates to an apparatus for encoding a television signal having at least two successive fields including a first and a second succesive field, each field being divided into a plurality of image blocks, comprising: a first branch for subsampling the second succesive field to provide a first transmission mode for each of said image blocks; a second branch for subsampling the second successive field to provide a second transmission mode for each of said image blocks; a third branch for subsampling the second successive field to provide a third transmission mode for each of said image blocks; switching means for selectively coupling one of said branches with an outgoing channel; and means for generating a control signal for each of said image blocks of the second successive field to control said switching means, said control signal being dependent on the amount of movement of an image block.

Description of the Prior Art

One of the common problems that arise in connection with the transmission of HDTV signals is that the broadcast channels are too narrow. In case of HD-MAC, for example, a bandwidth reduction by a factor of about four is to be expected. Another problem is the demand that the transmitted signal is compatible with the MAC/packet family so as to enable normal MAC receivers to receive the HDTV signals. This demand adds an extra constraint to the bandwidth reduction problem.

It is known in the art that the above problems can be dealt with by means of reducing the diagonal frequency components in an image being transmitted and using different 'refresh' frequencies (transmission modes) for the stationary and the moving parts(blocks) of the image being transmitted.

In order to use different refresh frequencies for different parts of the image, certain motion estimation for each part of the image should be conducted. Based on the motion estimation one may decide which refresh frequency may be used for a given part of the image.

Conventionally, the motion estimation was based on a spatial distance between a part of the first frame out of pairs of television frames and a corresponding part of the second frame out of said pairs of television frames. One such device is disclosed in United States Patent US-A-5,036,392 issued to Janssen et al.

Another device is disclosed in the article "Movement Processing for an HD-MAC Coding System" from J. van der Meer et al., in: Signal Processing of HDTV, Proceedings of the Second International Workshop on Signal Processing of HDTV, 29. February 1988, L'Aquila (IT), pages 337-344. This article is directed to the motion processing for an HD-MAC coding system according to the generic portion of claim 1. Motion is detected by comparing the spatial sample difference in adjacent frames and based thereon block motion is determined. Depending on the block motion a motion processor identifies one of three motion modes and the HD-MAC coding system transmits a corresponding signal.

A problem with using the spatial distance for the motion estimation lies in the high computational complexity involved.

Another problem with using the spatial distance for the motion estimation is that precise motion estimation cannot be always expected, which may result in incorrect refresh frequencies and also poor display of the image.

Summary of the Invention

These and other problems encountered in employing spatial distance estimation method are overcome by employing an encoder in accordance with the present invention, that is, that the present invention provides an apparatus for encoding a television signal having at least two successive fields including a first and a second successive field, each field being divided into a plurality of image blocks, comprising: a first branch for subsampling the second successive field to provide a first transmission mode for each of said image blocks; a second branch for subsampling the second successive field to provide a second transmission mode for each of said image blocks; a third branch for subsampling the second successive field to provide a third transmission mode for each of said image blocks; switching means for selectively coupling one of said branches with an outgoing channel; and means for generating a control signal for each of said image blocks of the second successive field to control said switching means, said control signal being dependent on the amount of movement of an image block, whereby said generating means are designed for generating the control signal in association with a phase shift between a frequency domain signal of each of said image blocks in the second successive field and a frequency domain signal of a corresponding image block in the first field.

Brief Description of the Drawings

Fig. 1 shows, in a simplified block diagram form, an HD-MAC 3 branch encoder in accordance with a preferred embodiment of the invention.

Fig. 2 illustrates the characteristics of the two-dimensional filters 3, 4, 5 of Fig. 1.

Fig. 3 illustrates subsampling patterns for each of transmission modes of 80 msec, 40 msec, and 20 msec.

Fig. 4 illustrates a result of the subsampling and line shuffling for the 80 msec transmission mode.

Fig. 5 shows five different routes per basic period of 80 msec used in a block route controller.

Detailed Description of the Prefered Embodiment

For the purpose of illustration, the present embodiment is emloyed for an HD-MAC system, namely it is intended to transmit images emanating from generators with 1152 useful lines, each having 1440 pixels, by using only one video pass band equal to that of a standard TV transmission system of 625 lines(576 useful lines of 720 pixels).

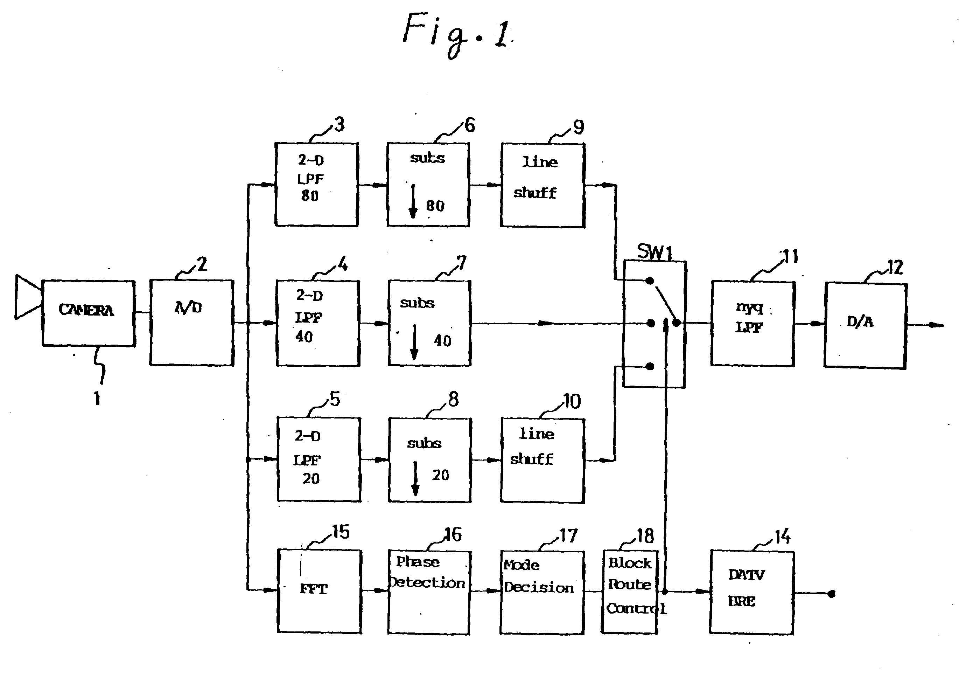

Referring now to Fig. 1, there is shown one preferred embodiment of 3 branch encoder which incorporates the present invention. The input signal originates from a camera 1 working on 1250 lines, 50Hz, 2:1 interlaced with a 16:9 aspect ratio. The encoder consists of three branches, one for each mode.

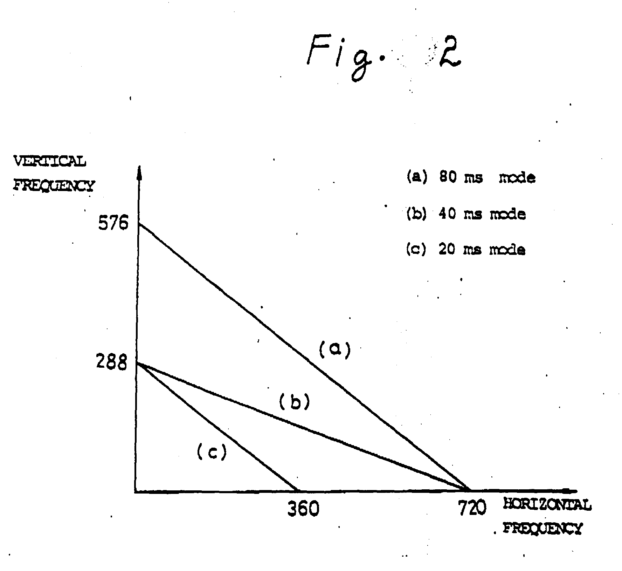

The 80 msec branch comprises a two-dimensional filter 3 whose charcteristic is shown in line a of Fig. 2, and a sampling circuit 6 for subsampling of each field of an image to provide the 80 msec transmission mode, and a line shuffler 9. The 40 msec branch comprises a two-dimensional filter 4 whose characteristic is shown in line b of Fig. 2, and a sampling circuit 7 for subsampling of each field of the image to provide the 40 msec transmission mode. The 20 msec branch comprises a two-dimensional filter 5 whose characteristic is shown in line c of Fig. 2, and a sampling circuit 8 for subsampling of each field of the image to provide the 20 msec transmission mode and a line shuffler 10.

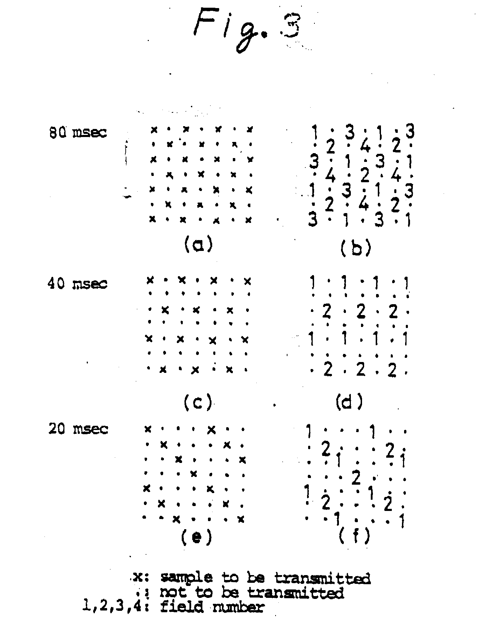

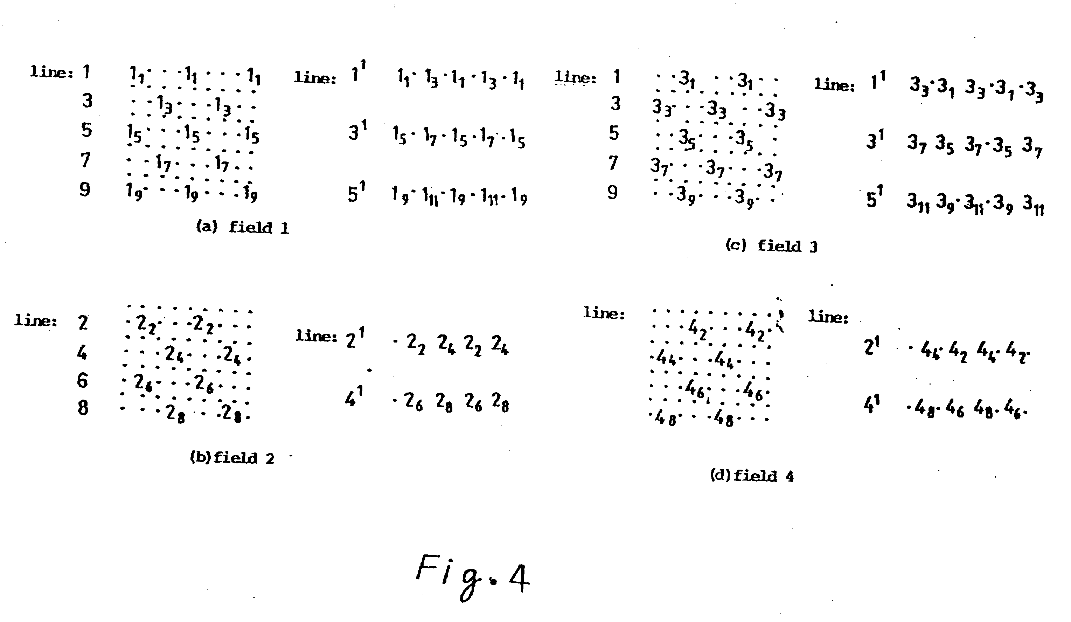

For the transmission of video signals, three different modes are used: namely, 80 msec mode for the stationary mode, 40 msec mode for the slowly moving mode and 20 msec mode for the moving mode. The three different modes employ three different sampling structures, respectively. Fig. 3 shows, for the purpose of illustration, the three sampling structures: in (a),(c) and (e), the spatial position of the used samples is indicated by an 'X'; in(b),(d) and (f), the transmission field number of each sample is indicated. In Fig. 4, the subsampling is shown per field in the left-hand column and the result of the line shuffling is shown in the right-hand column for the 80 msec case. It should be noted that no line shuffling is needed for the 40 msec mode because only 625 lines out of 1250 are transmitted. The line shuffling for the 20 msec case is equivalent to the line shuffling for the 80 msec mode.

Switch(SW1) selects the correct branch on a block basis with a control signal from a block route controller 18. Nyquist filter 11 then shapes the spectrum into a desired form. The signal emitting at the output of the encoder is in 625 lines, 50 Hz and 2:1 interlaced.

The input video signal from an A/D converter 2 is also passed to a FFT(Fast Fourier Transform) unit 15. The FFT unit performs conventional FFT operaticns for the signal sequence of each block in each successive television field. The resulting FFT signals are forwarded to a phase shift detection unit 16.

A phase shift detection is based on a well known shift property of the DFT(Discrete Fourier Transform). In a finite-area sequence $f(m,n)$(wherein m,n represent pixel positions in a block with the row index interval $0 \leq m \leq 16\text{-}1$ and the column index interval $0 \leq n \leq 16\text{-}1$) for the video signal sequence of a block in a field with its transform $F(u,\upsilon)$(wherein $u = 2\pi m/16$, $\upsilon = 2\pi n/16$), the shifted signal sequence of the corresponding block in the next successive field by h in row and i in column entails a phase shift to its transform counterpart as follows:

$$f(m + h, n + i) \leftrightarrow F(u, \upsilon) \exp (\text{-}j2\pi (hu + i\upsilon) /16) \qquad (1)$$

Thus, the phase shift between the FFT of the video signal sequence of a block in a field and the FFT of the shifted signal sequence of the corresponding block in the next successive field can be detected simply by comparing the first FFT with the second FFT. As there are (16 x 16 =) 256 different pixel positions (i.e., m=0,..,16-1; n=0,..., 16-1) in a block, a corresponding number of phase shift values may be detected which may be represented as $PS(u,\upsilon)$(wherein $u = 2\pi m/16$; $\upsilon = 2\pi n/16$; m=0,...16-1; and n=0,...,16-1).

Should one define $\ell$ and $\theta$ as

$$\ell = \sqrt{h^2 + i^2}$$

$$\theta = \tan^{-1} i/h,$$

$\ell$ will represent the amount of the movement of the block during a field period. Then, the above transform pair(1) can be restated, in terms of $\ell$ and $\theta$, as

$$f(m+\ell\cos\theta, n+\ell\sin\theta) \leftrightarrow$$

$$F(u, \upsilon) \exp(-j\,2\pi\ell\,(u\cos\theta + \upsilon\sin\theta)/16) \tag{2}$$

wherein $(\exp(-j\,2\pi\ell\,(u\cos\theta + \upsilon\sin\theta)/16))$ represents a phase shift of the transform in terms of $\ell$ and $\theta$. Again, as there are 256 different pixel positions in a block, a corresponding number of phase shift expressions may be found: $\exp(-j\,2\pi\ell\,(u\cos\theta + \upsilon\sin\theta)/16)$ (wherein, $u = 2\pi m/16$; $\upsilon = 2\pi n/16$; $m=0,...,16\text{-}1$; and $n=0,...,16\text{-}1$). As a result, one can obtain the following 256 equations for two variables, $\ell$ and $\theta$:

$$\exp(-j\,2\pi\ell\,(u\cos\theta + \upsilon\sin\theta)/16) = PS(u, \upsilon)$$

(wherein, $u = 2\pi m/16$; $\upsilon = 2\pi n/16$; $m=0,...,16\text{-}1$; and $n=0,...,16\text{-}1$).

Therefore, the value $\ell$ can be determined by solving the above equations.

The phase shift unit 16 generates a phase shift(and then, a value $\ell$) for each block in each successive field by comparing the FFT of the signal sequence of the block in the field with the FFT of the signal sequence of the corresponding block in the previous field. The resulting $\ell$ values will be forwarded to a mode decision unit 17.

As is stated above, there are 80 msec mode, 40 msec mode, and 20 msec mode. The mode will be decided in accordance with following criteria:

80 msec mode for $0 \le \ell \le 0.5$
40 msec mode for $0.5 < \ell \le 1.5$
20 msec mode for $\ell > 1.5$

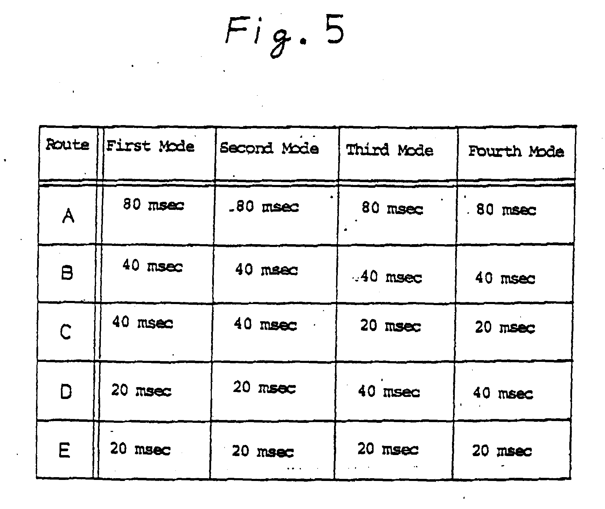

The mode so decided is sent to a block route controller 18. The route controller defines, from the mode per 20 msec, the block mode route per 80 msec in a conventional manner. The five possible routes are given in Fig. 5. The resulting signals controls the switch for the transmission of television signal according to the defined route, and is also sent to DATV BRE(Digitally Assisted Television Bit Rate Encoder) which transmits the branch switching signal to a decoder in a conventional manner.

**Claims**

1. An apparatus for encoding a television signal having at least two successive fields including a first and a second successive field, each field being divided into a plurality of image blocks, comprising:

   - a first branch (3, 6, 9) for subsampling the second successive field to provide a first transmission mode for each of said image blocks;
   - a second branch (4, 7) for subsampling the second successive field to provide a second transmission mode for each of said image blocks;
   - a third branch (5, 8, 10) for subsampling the second successive field to provide a third transmission mode for each of said image blocks;
   - switching means (SW1) for selectively coupling one of said branches with an outgoing channel; and
   - means (15-18) for generating a control signal for each of said image blocks of the second successive field to control said switching means (SW1), said control signal being dependent on the amount of movement of an image block,

   characterized in that
   said generating means (15-18) are designed for generating the control signal in association with a phase shift between a frequency domain signal of each of said image blocks in the second successive field and a frequency domain signal of a corresponding image block in the first field.

2. The apparatus of claim 1, wherein said means (15-18) for generating said control signal comprises:
   means (15) for transforming each of said image blocks to said frequency domain signal, and means (16) for calculating said phase shift between said frequency domain signals.

3. The apparatus of claim 2, wherein said means (15) for transforming is a Fast Fourier Transform unit.

4. The apparatus as of claim 3, wherein each of said image blocks has a predetermined number of pixels arranged in the form of a matrix, said frequency domain signal for each of said image blocks in said second successive field is

$$F(u, \upsilon) \exp (-j\, 2\pi\, (hu + i\upsilon) / N),$$

and said phase shift is

$$\exp (-j\, 2\pi\, \ell\, (u \cos \theta + \upsilon \sin \theta) / N),$$

when said corresponding block in the first field is

$$f(m,n),$$

and when said frequency domain signal of said corresponding block in the first field is

$$F(u,\upsilon),$$

and when said each image block in the second successive field is

$$f(m+h, n+i),$$

and wherein a pair of m, n represents a pixel position in a block, N is the number of pixels both in a row and a column indexes of the block, $u = 2\pi m/N$, $\upsilon = 2\pi n/N$, h is a pixel offset in the row index of the block in relation to the m, and i is a pixel offset in the column index of the block in relation to the n, and wherein $\ell = \sqrt{h^2 + i^2}$, $\theta = \tan^{-1} i / h$.

5. The apparatus of claim 4, wherein said means (15-18) for generating said control signal generates a transmission mode selection signal in response to the $\ell$ value.

6. The apparatus of claim 5, wherein said means (15-18) for generating said control signal generates the first transmission mode selection signal when $0 \leq \ell \leq 0.5$, the second transmission mode selection signal when $0.5 < \ell \leq 1.5$ and the third transmission mode selection signal when said $\ell$ is above 1.5.

**Patentansprüche**

1. Vorrichtung zum Codieren eines Fernsehsignals mit wenigstens zwei aufeinanderfolgenden Halb- bzw. Teilbildern, einschließlich eines ersten und eines zweiten, folgenden Halb- bzw. Teilbildes, wobei jedes Halb- bzw. Teilbild in einer Mehrzahl von Bildblöcken unterteilt ist, wobei die Vorrichtung aufweist:

- einen ersten Weg (3, 6, 9) zum Unterabtasten des zweiten, folgenden Halb- bzw. Teilbildes, um einen ersten Übertragungsmodus für jeden der Bildblöcke bereitzustellen;
- einen zweiten Weg (4, 7) zum Unterabtasten des zweiten, folgenden Halb- bzw. Teilbildes, um einen zweiten Übertragungsmodus für jeden der Bildblöcke bereitzustellen;
- einen dritten Weg (5, 8, 10) zum Unterabtasten des zweiten, folgenden Halb- bzw. Teilbildes, um einen dritten Übertragungsmodus für jeden der Bildblöcke bereitzustellen;
- Schaltmittel (SW1) zum selektiven Koppeln eines der Wege mit einem Ausgangskanal; und
- Mittel (15-18) zum Generieren eines Steuersignals für jeden der Bildblöcke des zweiten, folgenden Halb- bzw. Teilbildes, um die Schaltmittel (SW1) zu steuern, wobei das Steuersignal abhängig von dem Betrag der Bewegung eines Bildblocks ist,

dadurch gekennzeichnet, daß
die Generierungsmittel (15-18) ausgebildet sind zum Generieren des Steuersignals in Verbindung mit einer Phasenverschiebung zwischen einem Frequenzbereichsignal von jedem der Bildblöcke in dem zweiten, folgenden Halb- bzw. Teilbild und einem Frequenzbereichsignal eines korrespondierenden Bildblocks in dem ersten Halb- bzw. Teilbild.

2. Vorrichtung nach Anspruch 1, wobei die Mittel (15-18) zum Generieren des Steuersignals aufweisen:
Mittel (15) zum Transformieren jedes Bildblocks in das Frequenzbereichssignal und Mittel (16) zum Berechnen der Phasenverschiebung zwischen den Frequenzbereichssignalen.

3. Vorrichtung nach Anspruch 2, wobei das Mittel (15) zum Transformieren eine Fast Fourier- bzw. schnelle Fourier-Transformationseinheit ist.

4. Vorrichtung nach Anspruch 3, wobei jeder der Bildblöcke eine vorbestimmte Anzahl von Pixel hat, die in Form einer Matrix angeordnet sind, wobei das Frequenzbereichssignal für jeden der Bildblöcke in dem zweiten, folgenden Halb- bzw. Teilbild

$$F(u,\upsilon)\exp(-j2\pi(hu + i\upsilon) / N)$$

ist, und die Phasenverschiebung

$$\exp(-j2\pi\ell \,(u \cos \theta + \upsilon \sin \theta) / N)$$

ist, wenn der korrespondierende Block in dem ersten Halb- bzw. Teilbild

$$f(m,n)$$

ist und wenn das Frequenzbereichssignal des korrespondierenden Blocks in dem ersten Halb- bzw. Teilbild

$$F(u,\upsilon)$$

ist und wenn jeder Bildblock in dem zweiten, folgenden Halb- bzw. Teilbild

$$f(m+h, n+i)$$

ist, wobei ein Paar m, n eine Pixelposition in einem Block repräsentiert, N die Anzahl von Pixeln sowohl in einem Zeilen- als auch einem Spaltenindex des Blocks ist, $u = 2\pi m/N$, $\upsilon = 2\pi n/N$, h ein Pixeloffset in dem Zeilenindex des Blocks in bezug zu m ist und i ein Pixeloffset in dem Spaltenindex des Blocks in bezug zu n ist, und wobei $\ell = \sqrt{h^2 + i^2}$, $\theta = \tan^{-1} i/h$.

5. Vorrichtung nach Anspruch 4, wobei die Mittel (15-18) zum Generieren des Steuersignals ein Übertragungsmodusselektionssignal in Erwiderung auf den $\ell$-Wert generieren.

6. Vorrichtung nach Anspruch 5, wobei die Mittel (15-18) zum Generieren des Steuersignals das erste Übertragungsmodusselektionssignal generieren, wenn $0 \leq \ell \leq 0{,}5$ ist, das zweite Übertragungsmodusselektionssignal generieren, wenn $0{,}5 < \ell \leq 1{,}5$ ist und das dritte Übertragungsmodusselektionssignal generieren, wenn $\ell$ größer als 1,5 ist.

**Revendications**

1. Dispositif pour coder un signal de télévision ayant au moins deux champs successifs, comportant un premier et un deuxième champs successifs, chaque champ étant divisé en une pluralité de blocs d'images, comprenant :

- une première branche (3, 6, 9) pour sous-échantillonner le deuxième champ successif pour fournir un premier mode de transmission pour chacun desdits blocs d'images;

- une deuxième branche (4, 7), pour sous-échantillonner le deuxième champ successif, pour fournir un deuxième mode de transmission pour chacun desdits blocs d'images;
- une troisième branche (5, 8, 10), pour sous-échantillonner le deuxième champ successif, pour fournir un troisième mode de transmission pour chacun desdits blocs d'images;
- des moyens de commutation (SW1), pour coupler de manière sélective l'une desdites branches avec un canal de sortie; et
- des moyens (15 à 18), pour générer un signal de commande pour chacun desdits blocs d'images du deuxième champ successif, pour commander lesdits moyens de commutation (SW1), ledit signal de commande dépendant de la quantité de mouvement d'un bloc d'image,

caractérisé en ce que

lesdits moyens de génération (15 à 18) sont conçus pour générer le signal de commande en association avec un déphasage entre un signal du domaine fréquences de chacun desdits blocs d'images du deuxième champ successif, et un signal du domaine fréquences d'un bloc d'image correspondant du premier champ.

2. Dispositif selon la revendication 1, dans lequel lesdits moyens (15 à 18) pour générer ledit signal de commande comprennent :

des moyens (15), pour transformer chacun desdits blocs d'images en dit signal du domaine fréquences, et des moyens (16), pour calculer ledit déphasage entre lesdits signaux du domaine fréquences.

3. Dispositif selon la revendication 2, dans lequel lesdits moyens (15) de transformation sont constitués d'une unité de transformation de Fourier rapide.

4. Dispositif selon la revendication 3, dans lequel chacun desdits blocs d'images a un nombre prédéterminé de pixels agencés sous la forme d'une matrice, ledit signal du domaine fréquences pour chacun desdits blocs d'images dudit deuxième champ successif est

$$F(u, v) \exp(-j2\pi(hu+iv)/N),$$

et le ledit déphasage est

$$\exp(-j2\pi l(u \cos \Theta + v \sin \Theta)/N),$$

ledit bloc correspondant du premier champ étant

$$f(m,n),$$

et ledit signal du domaine fréquences dudit bloc correspondant du premier champ étant

$$f(u,v),$$

et chaque dit block d'images du deuxième champ successif étant

$$f(m+h, n+i),$$

et dans lequel une paire m, n, représente une position de pixel dans un blocs, N est le nombre de pixels dans des index à la fois de rangée et de colonne du bloc, $u = 2\pi m/N$, $v = 2\pi n/N$, h est un décalage de pixel dans l'index de rangée du bloc en relation avec m, et i est un décalage de pixel dans l'index de colonne du bloc en relation avec n, et dans lequel $l = \sqrt{h^2+i^2}$, $\Theta = \tan^{-1} i / h$.

5. Dispositif selon la revendication 4, dans lequel lesdits moyens (15 à 18) pour générer ledit signal de commande génèrent un signal de sélection de mode de transmission en réponse à la valeur de l.

6. Dispositif selon la revendication 5, dans lequel lesdits moyens (15 à 18) pour générer ledit signal de commande génèrent le premier signal de sélection de mode de transmission lorsque $0 \leq I \leq 0,5$, le deuxième signal de sélection de mode de transmission lorsque $0,5 < 1 \leq 1,5$ et le troisième signal de sélection de mode de transmission lorsque 1 est supérieur à 1,5.

EP 0 536 666 B1

# Fig.1

Fig. 2

VERTICAL
FREQUENCY

(a) 80 ms mode

(b) 40 ms mode

(c) 20 ms mode

576

288

(a)

(b)

(c)

360

720    HORIZONTAL
FREQUENCY

# Fig. 3

80 msec

```
x · x · x · x
· x · x · x ·
x · x · x · x
· x · x · x ·
x · x · x · x
· x · x · x ·
x · x · x · x
```

(a)

```
1 · 3 · 1 · 3
· 2 · 4 · 2 ·
3 · 1 · 3 · 1
· 4 · 2 · 4 ·
1 · 3 · 1 · 3
· 2 · 4 · 2 ·
3 · 1 · 3 · 1
```

(b)

40 msec

```
x · x · x · x
· · · · · · ·
· x · x · x ·
· · · · · · ·
x · x · x · x
· · · · · · ·
· x · x · x ·
```

(c)

```
1 · 1 · 1 · 1
· · · · · · ·
· 2 · 2 · 2 ·
· · · · · · ·
1 · 1 · 1 · 1
· · · · · · ·
· 2 · 2 · 2 ·
```

(d)

20 msec

```
x · · · x · ·
· x · · · x ·
· · x · · · x
· · · x · · ·
x · · · x · ·
· x · · · x ·
· · x · · · x
```

(e)

```
1 · · · 1 · ·
· 2 · · · 2 ·
· · 1 · · · 1
· · · 2 · · ·
1 · · · 1 · ·
· 2 · · · 2 ·
· · 1 · · · 1
```

(f)

x: sample to be transmitted
·: not to be transmitted
1,2,3,4: field number

**(a) field 1**

line: 1  $1_1' \cdots 1_1 \cdots 1_1$
3  $\cdots 1_3 \cdots 1_3 \cdots$
5  $1_5' \cdots 1_5 \cdots 1_5$
7  $\cdots 1_7 \cdots 1_7 \cdots$
9  $1_9' \cdots 1_9 \cdots 1_9$

line: 1'  $1_1' \ 1_3 \cdot 1_7 \cdot 1_3 \cdot 1_1$
3'  $1_5 \cdot 1_7 \cdot 1_5 \cdot 1_7 \cdot 1_5$
5'  $1_9 \cdot 1_{11} \cdot 1_9 \cdot 1_{11} \cdot 1_9$

**(b) field 2**

line: 2  $2_2' \cdots 2_2 \cdots$
4  $\cdots 2_4 \cdots 2_4$
6  $2_6' \cdots 2_6 \cdots$
8  $\cdots 2_8 \cdots 2_8$

line: 2'  $\cdot 2_2 \ 2_4 \ 2_2 \ 2_4$
4'  $\cdot 2_6 \ 2_8 \ 2_6 \ 2_8$

**(c) field 3**

line: 1  $\cdots 3_1 \cdots 3_1 \cdots$
3  $3_3' \cdots 3_3 \cdots 3_3$
5  $\cdots 3_5 \cdots 3_5 \cdots$
7  $3_7' \cdots 3_7 \cdots 3_7$
9  $\cdots 3_9 \cdots 3_9 \cdots$

line: 1'  $3_3 \cdot 3_1 \ 3_3 \cdot 3_1 \ 3_3$
3'  $3_7 \ 3_5 \ 3_7 \cdot 3_5 \ 3_7$
5'  $3_{11} \ 3_9 \cdot 3_{11} \cdot 3_9 \ 3_{11}$

**(d) field 4**

line: 2  $\cdots 4_2 \cdots 4_2 \cdots$
4  $4_4' \cdots 4_4 \cdots$
6  $\cdots 4_6 \cdots 4_6$
8  $4_8' \cdots 4_8 \cdots$

line: 2'  $\cdot 4_6 \ 4_2 \ 4_4 \ 4_2$
4'  $\cdot 4_8 \ 4_6 \ 4_8 \cdot 4_6$

*Fig. 4*

12

# Fig. 5

| Route | First Mode | Second Mode | Third Mode | Fourth Mode |
|-------|------------|-------------|------------|-------------|
| A | 80 msec | 80 msec | 80 msec | 80 msec |
| B | 40 msec | 40 msec | 40 msec | 40 msec |
| C | 40 msec | 40 msec | 20 msec | 20 msec |
| D | 20 msec | 20 msec | 40 msec | 40 msec |
| E | 20 msec | 20 msec | 20 msec | 20 msec |